(19) Europäisches Patentamt
European Patent Office
Office européen des brevets

(11) **EP 4 648 209 A1**

(12) **EUROPEAN PATENT APPLICATION**
published in accordance with Art. 153(4) EPC

(43) Date of publication:
**12.11.2025 Bulletin 2025/46**

(21) Application number: **24860457.1**

(22) Date of filing: **30.08.2024**

(51) International Patent Classification (IPC):
**H01M 50/531** (2021.01)    **H01M 50/538** (2021.01)
**B21D 22/02** (2006.01)

(52) Cooperative Patent Classification (CPC):
**B21D 22/02; H01M 50/531; H01M 50/538;**
Y02E 60/10; Y02P 70/50

(86) International application number:
**PCT/KR2024/013045**

(87) International publication number:
**WO 2025/048539 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 KR 20230115853**

(71) Applicant: **LG Energy Solution, Ltd.**
**Seoul 07335 (KR)**

(72) Inventors:
• **KIM, Do-Yeon**
**Daejeon 34122 (KR)**
• **LEE, Je-Jun**
**Daejeon 34122 (KR)**
• **KIM, Hee-Jae**
**Daejeon 34122 (KR)**

(74) Representative: **Goddar, Heinz J.**
**Boehmert & Boehmert
Anwaltspartnerschaft mbB
Pettenkoferstrasse 22
80336 München (DE)**

(54) **TAB FORMING APPARATUS OF ELECTRODE ASSEMBLY**

(57)    A forming device according to an embodiment of the present disclosure is a forming device for radially bending an electrode tab in which a first electrode of an electrode assembly where a first electrode, a separator, and a second electrode are stacked and wound around a central axis is extending to an axial end further than a separator and exposed, wherein the forming device includes a forming jig for bending the electrode tab, the forming jig includes an opposing surface facing the electrode assembly, and the opposing surface has an indentation depth of the opposing surface that is indented in a direction opposite to the pressing direction.

FIG. 8

100

EP 4 648 209 A1

**Description**

TECHNICAL FIELD

The present disclosure relates to an electrode assembly tab forming device.
This application is based on and claims priority from Korean Patent Application No. 10-2023-0115853 filed on August 31, 2023, with the Korean Intellectual Property Office, the disclosure of which is incorporated herein in its entirety by reference.

BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.
Secondary batteries widely used at present include lithium-ion batteries, lithium polymer batteries, nickel cadmium batteries, nickel hydrogen batteries, nickel zinc batteries and the like. An operating voltage of the unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage and/or the demanded charging and discharging capacity.
Meanwhile, conventional cylindrical secondary batteries generally had a structure in which tabs connecting the jelly-roll and the external terminal were welded to the foil of the jelly-roll. However, cylindrical secondary batteries having such a structure had a limited current path and the resistance of the jelly-roll itself was bound to be very high. Additionally, a method of lowering the resistance by increasing the number of tabs connecting the jelly-roll and the external terminal was attempted, but there was a limit to lowering the resistance to the desired level and securing a sufficient current path by simply increasing the number of tabs.
As the current applied to the secondary battery increases, a new jelly-roll structure is being developed in which the uncoated portions exposed to the axial end of the jelly-roll are connected to a current collector plate by welding or the like in a state of being flattened by radially bending the uncoated portions, and the current collector plate is connected to the external terminal in order to lower the resistance.
To produce an electrode assembly having such a structure, a processing process of exposing the uncoated portions to both axial ends of the electrode assembly and bending them radially is required. This bending process is usually performed using a forming jig.
In the past, an iris shutter type jig was used to perform a first processing to gather the ends of the uncoated portion extending straightly in the axial direction so as to be radially inclined, and then a second processing to gather and press the uncoated portion that is radially inclined a little more using a jig that rotates about a rotation axis corresponding to the axis of the electrode assembly, and finally, a third processing to press the inclined electrode as flat as possible using a flat jig.
Here, if the second processing was performed without the first processing to gather the ends of the uncoated portion so as to be radially inclined, the buckling phenomenon in which the uncoated portion slumps could not be avoided. Accordingly, it was essential to first perform the first processing to gather the ends of the uncoated portion radially.
Additionally, even in performing the second processing, if the uncoated portion was pressed without rotating the jig, the buckling phenomenon in which the uncoated portion still slumps occurred due to the frictional force between the jig and the ends of the uncoated portion. Accordingly, it was essential to press the uncoated portion while rotating the jig even in performing the second processing.
In this way, the bending forming process for an uncoated portion of a conventional jelly-roll type electrode assembly had many steps and the equipment required at each step had to have a complex structure.
This multi-step processing process and complex processing equipment limited the ability to shorten the processing cycle and reduce the size of the equipment.
Meanwhile, to solve these problems, a tab forming device has been developed in the past that can reduce the number of processing steps for flattening the uncoated portion exposed at the axial end of the electrode assembly by radially bending it and simplify the processing method of each processing step. However, even this forming device did not consider the overlapping amount of the uncoated portion, which resulted in the buckling phenomenon of the uncoated portion. In the case of buckling of the uncoated portion as described above, the possibility of a short circuit inside the battery and escalating into a thermal event could not be excluded.

DISCLOSURE

Technical Problem

Therefore, the present disclosure is directed to effectively preventing an internal short circuit of a battery.

In another aspect, the present disclosure is also directed to preventing buckling phenomenon of the uncoated portion by providing a jig that considers the overlapping amount of the uncoated portion of the electrode assembly.

However, technical problems to be solved by the present disclosure are not limited to the above-described problems, and other problems not mentioned herein may be clearly understood by those having ordinary skill in the art from the following description of the present disclosure.

Technical Solution

A forming device according to an embodiment of the present disclosure for solving the above-described problem is a forming device for radially bending an electrode tab in which a first electrode of an electrode assembly where a first electrode, a separator, and a second electrode are stacked and wound around a central axis is extending to an axial end further than a separator and exposed, wherein the forming device includes a forming jig for bending the electrode tab, the forming jig includes an opposing surface facing the electrode assembly, and the opposing surface has an indentation depth of the opposing surface that is indented in a direction opposite to the pressing direction.

For example, the opposing surface may have a shape that is curved in a direction opposite to the pressing direction.

According to one aspect of the present disclosure, the indentation depth of the opposing surface that is indented in a direction opposite to the pressing direction may be configured to increase toward the central axis.

According to another aspect of the present disclosure, the indentation depth of the opposing surface that is indented in a direction opposite to the pressing direction may be configured to increase and then decrease from the center side toward the outer circumferential side.

According to still another aspect of the present disclosure, the indentation depth of the opposing surface that is indented in a direction opposite to the pressing direction may be configured to increase, then maintain a certain length and then decrease from the center side toward the outer circumferential side.

Preferably, the indentation depth of the opposing surface that is indented in a direction opposite to the pressing direction may be configured to increase linearly, then maintain a certain length and then decrease linearly from the center side toward the outer circumferential side.

According to one aspect of the present disclosure, at least a portion of the electrode tab of the electrode assembly may be divided into a plurality of independently bendable segments.

Here, in the electrode assembly, the bent surface area of the bent electrode assembly may include a section for uniform number of stacks in which the number of stacks of segments is equal to or greater than a predetermined number of stacks along the radial direction, and a section for decreasing number of stacks that is located adjacent to the section for uniform number of stacks and in which the number of stacks of segments decreases as moving away from the section for uniform number of stacks.

Preferably, in the electrode assembly, the bent surface area of the bent electrode assembly may include a section for increasing number of stacks in which the number of stacks of segments increases along the radial direction.

According to another aspect of the present disclosure, the indentation depth may be configured to be greater than the stacking thickness of the segments.

According to still another aspect of the present disclosure, the indentation depth may be configured to be equal to the stacking thickness of the segments.

According to one aspect of the present disclosure, the indentation depth may be configured to be 100 um to 875 um.

According to another aspect of the present disclosure, the indentation depth may be configured to be 50 um to 700 um.

According to still another aspect of the present disclosure, the forming jig may be configured to include a steel material.

Advantageous Effects

The present disclosure may effectively prevent an internal short circuit of a battery.

In another aspect, according to the present disclosure, it is possible to effectively prevent buckling phenomenon of the uncoated portion by providing a jig that considers the overlapping amount of the uncoated portion of the electrode assembly.

However, effects to be obtained by the present disclosure are not limited to the above-described effects, and other effects not mentioned herein may be clearly understood by those having ordinary skill in the art from the following description of the present disclosure.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a plan view of a first embodiment of a first electrode having an uncoated portion and a coated portion.
FIG. 2 is a side view showing a stacked state of an electrode and a separator for winding into a jelly-roll type electrode assembly.
FIG. 3 is a front view showing a process of radially bending the electrode portions exposed at both axial ends of the electrode assembly as electrode tabs and stacking a current collector plate thereto.
FIG. 4 is a plan view of a second embodiment of a first electrode having an uncoated portion and a coated portion.
FIG. 5 is a front view showing a jelly-roll type electrode assembly to which the electrode of FIG. 4 is applied.
FIG. 6 is a graph showing the counting results of the number of stacks of segments along the radial direction in a bent surface area formed on the upper portion of electrode assemblies according to an embodiment of the present disclosure.
FIG. 7 is a view showing the bending results of an electrode assembly to which a conventional flat jig is applied.
FIG. 8 is a plan view of a forming jig of a forming device for bending an electrode assembly and an electrode tab provided at an axial end of the electrode assembly according to an embodiment of the present disclosure.
FIG. 9 is a cross-sectional view of the forming jig of FIG. 8.
FIG. 10 is a view for describing a forming jig according to another embodiment of the present disclosure.
FIG. 11 is a schematic diagram showing a cross-section of a bent surface area formed when segments are bent toward the core side of the electrode assembly.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, to help understanding of the present disclosure, the accompanying drawings are not illustrated on an actual scale, but the dimensions of some components may be exaggerated.

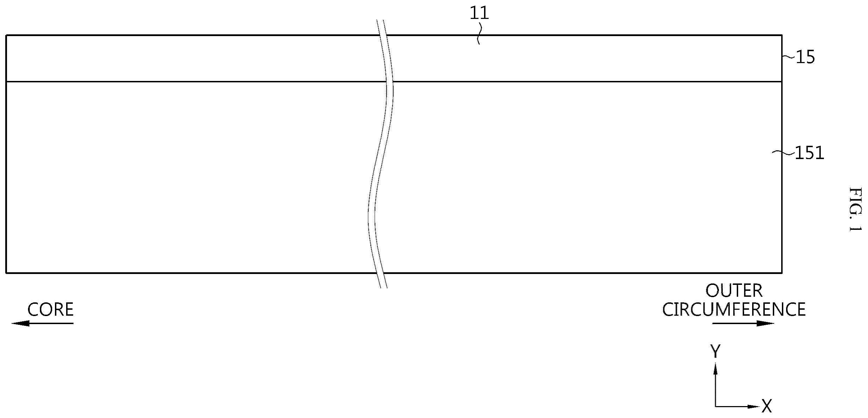

FIG. 1 is a plan view of a first embodiment of a first electrode having an uncoated portion and a coated portion.

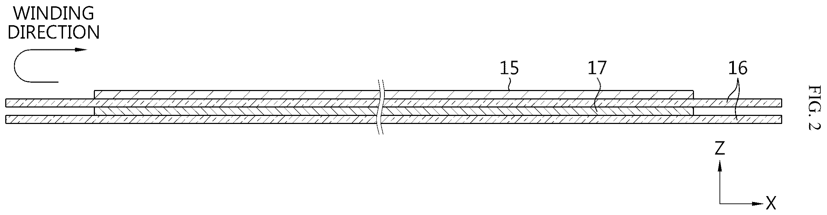

FIG. 2 is a side view showing a stacked state of an electrode and a separator 16 for winding into a jelly-roll type electrode assembly 10.

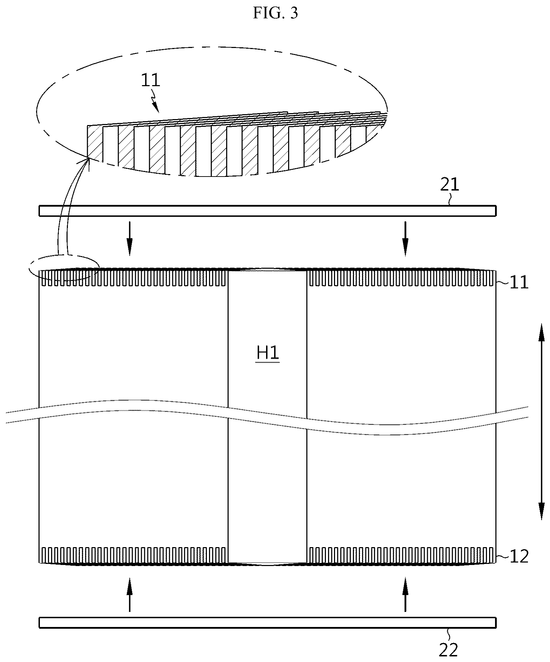

FIG. 3 is a front view showing a process of radially bending the electrode portions exposed at both axial ends of the electrode assembly 10 as electrode tabs 11 and stacking a current collector plate thereto.

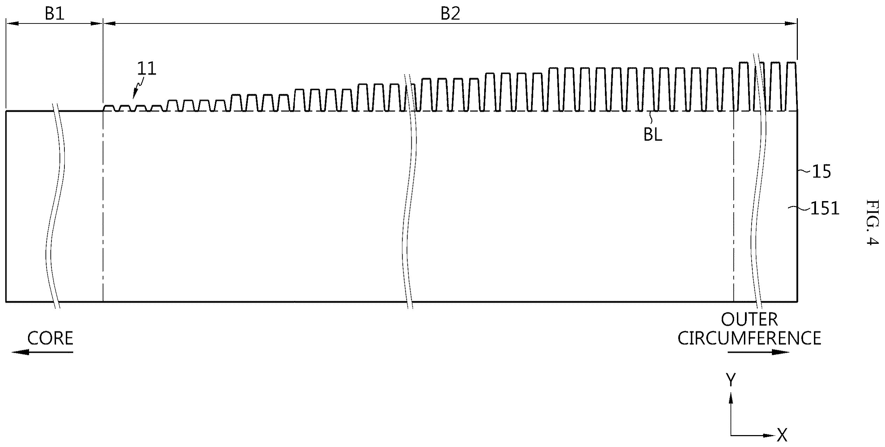

FIG. 4 is a plan view of a second embodiment of a first electrode having an uncoated portion and a coated portion.

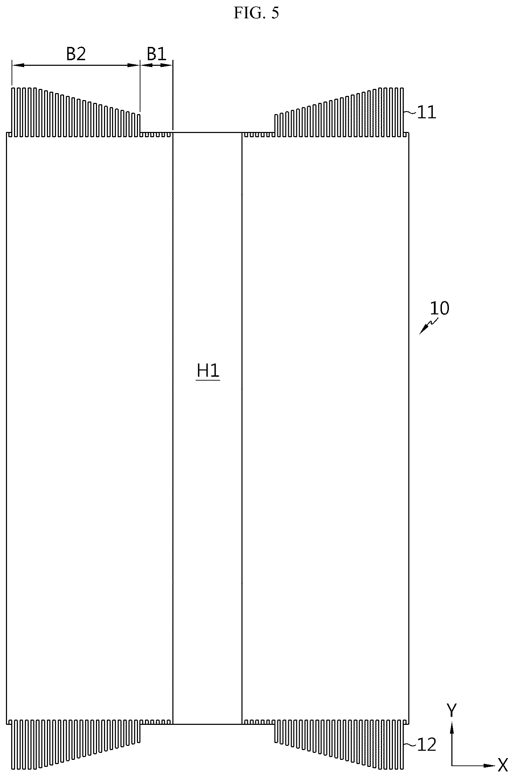

FIG. 5 is a front view showing a jelly-roll type electrode assembly 10 to which the electrode of FIG. 4 is applied.

Hereinafter, referring to FIGS. 1 to 5, embodiments of electrode assemblies 10 in which the forming device according to the present disclosure may be used will be described. However, the forming device of the present disclosure is not necessarily applied only to the electrode assembly 10 having the structure described below.

The electrode assembly 10 to which the forming device of the present disclosure is applied is formed by stacking a first electrode 15, a separator 16, and a second electrode 17 in the form of a sheet having a predetermined width in the width direction Y and extending long in the length direction X, in the order of the first electrode 15, the separator 16, the second electrode 17, and the separator 16, at least once, and winding them around the winding axis Y.

The first electrode 15 and/or the second electrode 17 are manufactured in a form where an active material is coated on a metal foil. The first electrode 15 and/or the second electrode 17 includes a coated portion in which an active material is coated on a metal foil, and an uncoated portion in which an active material is not coated and thus the surface of the metal foil is exposed. At one end of the first electrode 15 in the width direction Y, that is, in the axial direction Y, there is a first electrode tab 11 area, which is an uncoated portion in which an active material is not coated. And (or), at the other end of the second electrode 17 in the width direction Y, that is, in the axial direction Y, there is a second electrode tab 12 area, which is an uncoated portion in which an active material is not coated. The electrode tab 11 may be electrically connected to an electrode terminal provided in a battery can (not shown) in which an electrode assembly 10 is to be accommodated through a current collector plate.

In stacking the first electrode 15, the separator 16, the second electrode 17, and the separator 16 to wind the electrode assembly 10 in the form of a jelly-roll, the first electrode tab 11 and the second electrode tab 12 are stacked so that each of them is further exposed (protruding) in the width direction Y of the separator 16, that is, to one end and the other end in the axial direction Y, respectively. Then, the electrode assembly 10 may be manufactured by winding the stack formed by stacking in this manner in the X-axis direction around the Y-axis.

The electrode assembly 10 applied to the present disclosure may be of the jelly-roll type. In this case, an additional separator 16 may be provided on the outer circumferential surface of the electrode assembly 10 for insulation from the battery can.

The first electrode 15 includes a first electrode current collector (metal foil) and a first electrode active material 151 applied on one surface or both surfaces of the first electrode current collector. At one end of the first electrode current collector in the width direction Y, there is an uncoated portion where the first electrode active material is not applied. The uncoated portion functions as a first electrode tab 11. The first electrode tab 11 is provided at the upper portion of the electrode assembly 10 in the height direction Y.

The second electrode includes a second electrode current collector (metal foil) and a second electrode active material applied on one surface or both surfaces of the second electrode current collector. At the other end of the second electrode current collector in the width direction Y, there is an uncoated portion where the second electrode active material is not applied. The uncoated portion functions as a second electrode tab 12. The second electrode tab 12 is provided at the lower portion of the electrode assembly 10 in the height direction.

The first electrode tab 11 and the second electrode tab 12 may be, for example, a positive electrode tab and a negative electrode tab, or vice versa.

In the present disclosure, the positive electrode active material coated on the positive electrode plate and the negative electrode active material coated on the negative electrode plate may be used without limitation as long as they are active materials known in the art.

In one example, the positive electrode active material may include an alkali metal compound represented by the general chemical formula $A[A_xM_y]O_{2+z}$ (wherein A includes at least one element selected from Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x + y \leq 2$, $-0.1 \leq z \leq 2$; and the stoichiometric coefficients x, y, and z are selected such that the compound remains electrically neutral).

In another example, the positive electrode active material may be an alkali metal compound $_xLiM^1O_2(1_x)Li_2M^2O_3$ (wherein $M^1$ includes at least one element having an average oxidation state of 3; $M^2$ includes at least one element having an average oxidation state of 4; $0 \leq x \leq 1$) as disclosed in US6,677,082, US6,680,143, and the like.

In still another example, the positive electrode active material may be lithium metal phosphate represented by the general chemical formula $Li_aM^1{}_xFe_{1-x}M^2{}_yP_{1-y}M^3{}_zO_{4-z}$ (wherein $M^1$ includes at least one element selected from Ti, Si, Mn, Co, Fe, V, Cr, Mo, Ni, Nd, Al, Mg and Al; $M^2$ includes at least one element selected from Ti, Si, Mn, Co, Fe, V, Cr, Mo, Ni, Nd, Al, Mg, Al, As, Sb, Si, Ge, V and S; $M^3$ includes a halogen element selectively including F; $0 < a \leq 2$, $0 \leq x \leq 1$, $0 \leq y < 1$, $0 \leq z < 1$; and the stoichiometric coefficients a, x, y and z are selected such that the compound remains electrically neutral), or $Li_3M_2(PO_4)_3$ (wherein M includes at least one element selected from Ti, Si, Mn, Fe, Co, V, Cr, Mo, Ni, Al, Mg and Al).

Preferably, the positive electrode active material may include primary particles and/or secondary particles in which primary particles are agglomerated.

In one example, the negative electrode active material may use carbon material, lithium metal or lithium metal compound, silicon or silicon compound, tin or tin compound, and the like. Metal oxides such as $TiO_2$ and $SnO_2$ having a potential of less than 2 V may also be used as the negative electrode active material. Low crystalline carbon, high crystalline carbon, and the like may all be used as the carbon material.

The separator 16 may use a porous polymer film, for example, a porous polymer film made of a polyolefin-based polymer such as an ethylene homopolymer, a propylene homopolymer, an ethylene/butene copolymer, an ethylene/hexene copolymer, an ethylene/ methacrylate copolymer, and the like, alone or in a laminated manner. As another example, the separator 16 may use a conventional porous nonwoven fabric, for example, a nonwoven fabric made of high melting-point glass fibers, polyethylene terephthalate fibers, or the like.

At least one surface of the separator 16 may include a coating layer of inorganic particles. It is also possible that the separator 16 itself may be formed of a coating layer of inorganic particles. The particles constituting the coating layer may have a structure in which they are combined with a binder so that an interstitial volume exists between adjacent particles.

The inorganic particles may be made of an inorganic material having a dielectric constant of 5 or higher. Non-limiting examples of the inorganic particles may include at least one material selected from the group consisting of $Pb(Zr,Ti)O_3$(PZT), $Pb_{1-x}La_xZr_{1-y}Ti_yO_3$(PLZT), $PB(Mg_3Nb_{2/3})O_3$-$PbTiO_3$(PMN-PT), $BaTiO_3$, hafnia($HfO_2$), $SrTiO_3$, $TiO_2$, $Al_2O_3$, $ZrO_2$, $SnO_2$, $CeO_2$, MgO, CaO, ZnO, and $Y_2O_3$.

Current collector plates 21, 22 may be electrically connected to the first electrode tab 11 and the second electrode tab 12, respectively. The first electrode tab 11 and the second electrode tab 12 may be coupled to the first current collector plate 21 and the second current collector plate 22 by welding or the like, respectively, in a state of being bent radially as shown in FIG. 3.

The forming device of the present disclosure is a processing device for radially bending the first electrode tab 11 and the second electrode tab 12.

The shapes of the first electrode tab 11 and the second electrode tab 12 to which the forming device may be applied are not limited to the structure described above. The first electrode tab 11 shown in FIG. 1 has a shape in which the first electrode tab 11 is continuously extending in the winding direction (length direction) X. However, the first electrode tab 11 may also have a discontinuous shape in the winding direction (length direction) X.

Referring to FIG. 4, the first electrode tab 11 provided on the first electrode 15 may have a shape of being cut in the axial direction (height direction) Y at predetermined intervals along the length direction. By this cutting line, the first electrode tab 11 may have a shape in which a plurality of segments 111 are arranged along the length direction.

The shape of the segments 111 formed by the cutting line may be an isosceles trapezoid as shown, or a rectangle, and may also have various other shapes such as a semicircle or a semi-ellipse. And, segments 111 of these various shapes may be used together, and the width and height of the segments 111, the interval between the segments 111, and the like may be constant, or may vary under a predetermined rule.

Meanwhile, as shown in FIG. 4, a bottom line BL, which is an imaginary line connecting the bottoms of the segments 111, may be defined. The bottom line BL may be, for example, a straight line or a curved line.

Additionally, as shown in FIGS. 4 and 5, the segments 111 may be omitted in a predetermined section B1 near the core, and within the section B2 where the segments 111 are provided, the segments 111 may have a form in which the height protruding in the axial direction gradually or stepwise increases from the core toward the outer circumference. Although not shown in the drawing, the segments 111 may be deleted in the last one turn section B3 for convenience of processing, or the like. Alternatively, in another embodiment, unlike FIGS. 4 and 5, within the section B2 where the segments 111 are provided, the segments 111 may have a form in which the height protruding in the axial direction is the same.

If the electrode tab 11 is formed in the form of the segments 111 as described above, the lower end of the segments 111 may be bent when the electrode tab 11 may be bent in the radial direction. For example, the segments 111 may be bent along the bottom line BL shown in FIG. 4. Alternatively, the segments 111 may be bent at a position higher than the bottom line BL shown in FIG. 4.

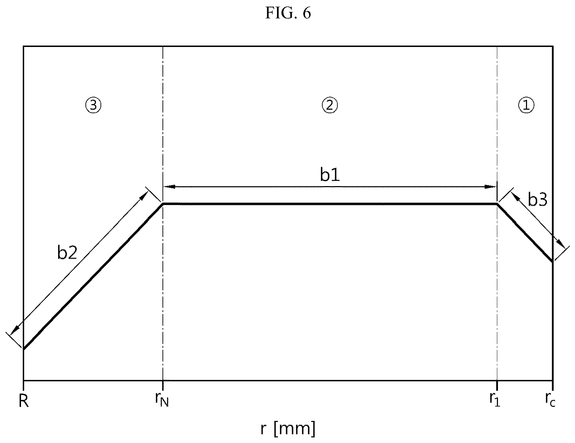

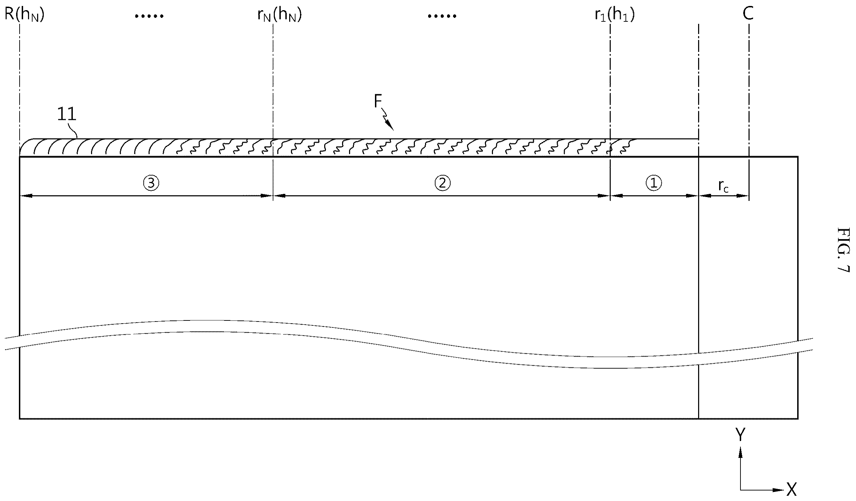

FIG. 6 is a graph showing the counting results of the number of stacks of segments along the radial direction in a bent surface area formed on the upper portion of electrode assemblies 10 according to an embodiment of the present disclosure, and FIG. 7 is a view showing the bending results of an electrode assembly 10 to which a conventional flat jig is applied.

Referring to FIG. 6, a section for uniform number of stacks b1 of the segments is shown. The section for uniform number of stacks b1 is a radius section of a flat area in each graph. A section for decreasing number of stacks b2 in which the number of stacks of the segments decreases as the radius increases is shown outside the section for uniform number of stacks b1. The section for decreasing number of stacks b2 is a radius section in which the number of stacks of the segments decreases as the radius of the electrode assembly 10 increases. The section for uniform number of stacks b1 and the section for decreasing number of stacks b2 are adjacent in the radial direction. On the other hand, a section for increasing number of stacks b3 in which the number of stacks of the segments increases as the radius increases is shown inside the section for uniform number of stacks b1. The section for increasing number of stacks b3 is a radius section in which the number of stacks of the segments increases as the radius of the electrode assembly 10 increases. The reason why the number of stacks in the electrode assembly 10 changes as described above is due to the height of the segments, the starting position of the segments, the ending position of the segments, and the like. As a result, depending on the number of stacks of the segments, the axial height of the bent surface area of the electrode assembly 10 may vary in the radial direction.

Meanwhile, the conventional flat jig is configured as a jig whose surface facing the electrode tab 11 has a flat shape. Since the conventional flat jig has a flat shape that does not consider the overlapping thickness, the electrode assembly 10 is pressed in a planar shape.

As a result, as shown in FIG. 7, the plurality of electrode tabs 11 are buckled. In this case, the possibility that the buckled electrode tabs 11 contact the electrode tabs 11 having an adjacent opposite electrode increases. Therefore, the possibility of an internal short circuit in the battery increases, and the possibility of eventually escalating into a thermal event increases.

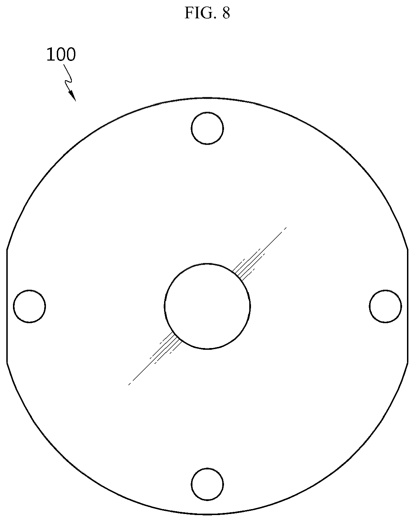

The present disclosure has been invented to solve these problems, which will be described in detail with reference to FIGS. 8 to 11 below.

FIG. 8 is a plan view of a forming jig 100 of a forming device for bending an electrode assembly 10 and an electrode tab 11 provided at an axial end of the electrode assembly 10 according to an embodiment of the present disclosure.

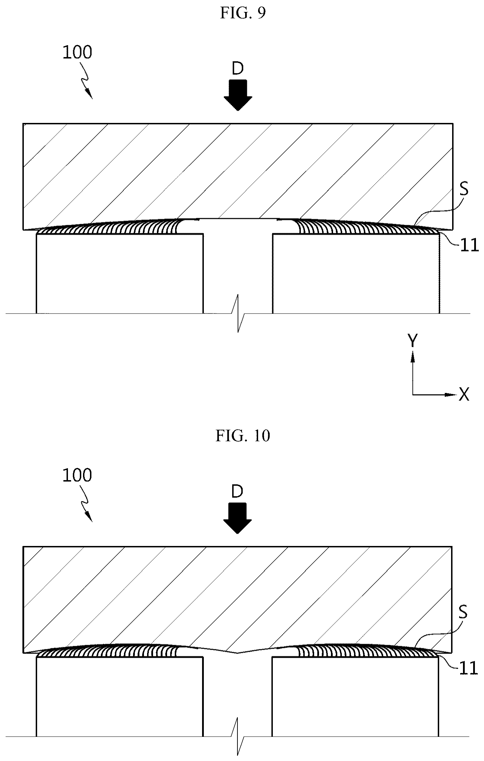

Referring to FIGS. 8 and 9, the forming device may be configured to radially bend an electrode tab 11 in which a first electrode of an electrode assembly 10 where a first electrode, a separator 16, and a second electrode are stacked and wound around a central axis is extending to an axial end further than a separator 16 and exposed.

The forming jig 100 and the flattening jig 50 may be made of steel. The forming jig 100 may bend an electrode tab 11 that is extending straightly in the axial direction and disposed in a spiral shape radially inward without buckling.

More specifically, the forming device may include a forming jig 100 for bending the electrode tab 11. The forming jig 100 may include an opposing surface S facing the electrode assembly 10. In particular, the forming jig 100 may face the electrode tab 11 of the electrode assembly 10. Here, the opposing surface S may be configured to have an indentation depth of the opposing surface S that is indented in a direction opposite to the pressing direction D.

According to such a structure, it is possible to bend the electrode tab 11 in consideration of the overlapping thickness of the electrode tab 11, which may be different at each bending position of the electrode tab 11. That is, even if there is an area where the overlapping thickness of the electrode tab 11 is thick, the indentation depth of the opposing surface S is provided at a predetermined depth, and thus buckling of the electrode tab 11 may be prevented.

FIG. 9 is a cross-sectional view of the forming jig 100 of FIG. 8.

In an embodiment, the opposing surface S may be configured to have a shape that is curved in a direction opposite to the pressing direction D. For example, the opposing surface S may have a convex curved shape in a direction opposite to the pressing direction D. For example, as in the embodiment of FIG. 9, the indentation depth of the opposing surface S that is indented in a direction opposite to the pressing direction D may increase toward the central axis.

In another embodiment, the opposing surface S may be configured to have an approximately parabolic shape. That is, it may be configured to have the deepest indentation depth at the central axis and decreasing depth toward the outer circumference.

According to such a structure, bending in consideration of the profile of the section for decreasing number of stacks b2 may be possible. That is, since the shape of the opposing surface S is configured to correspond to the profile of the section for decreasing number of stacks b2 located on the outer circumferential side of the electrode assembly 10, buckling of the electrode tab 11 located in the section for decreasing number of stacks b2 may be prevented. Additionally, since the jig shape is monotonous, it may be advantageous in terms of jig manufacturing.

FIG. 10 is a view for describing a forming jig 100 according to another embodiment of the present disclosure.

In another embodiment of the present disclosure, the indentation depth of the opposing surface S that is indented in a direction opposite to the pressing direction D may be configured to increase and then decrease from the center side toward the outer circumferential side.

For example, referring to FIG. 10, the depth of the opposing surface S is configured to increase and then decrease from the center side toward the outer circumferential side.

According to such a structure, bending in consideration of the profiles of the section for decreasing number of stacks b2 and the section for increasing number of stacks b3 may be possible. That is, since the shape of the opposing surface S is configured to correspond to the profile of the section for decreasing number of stacks b2 located on the outer circumferential side of the electrode assembly 10 and the profile of the section for increasing number of stacks b3 located on the center side of the electrode assembly 10, respectively, buckling of the electrode tabs 11 located in the section for decreasing number of stacks b2 and in the section for increasing number of stacks b3 may be effectively prevented.

In still another embodiment of the present disclosure, the indentation depth of the opposing surface S that is indented in a direction opposite to the pressing direction D may be configured to be constant, then increase and then decrease from the center side toward the outer circumferential side.

For example, unlike FIG. 10, from the point where the electrode tab 11 begins to be formed, the indentation depth of the opposing surface S may be configured to increase and then decrease from the center side toward the outer circumferential side.

According to such a structure, bending that more accurately considers the profiles of the section for decreasing number of stacks b2 and the section for increasing number of stacks b3 may be possible. That is, since the shape of the opposing surface S is configured to correspond to the profile of the section for decreasing number of stacks b2 located on the outer circumferential side of the electrode assembly 10 and the profile of the section for increasing number of stacks b3 located on the center side of the electrode assembly 10, respectively, buckling of the electrode tabs 11 located in the section for decreasing number of stacks b2 and in the section for increasing number of stacks b3 may be effectively prevented.

In still another embodiment of the present disclosure, the indentation depth of the opposing surface S that is indented in a direction opposite to the pressing direction D may be configured to increase, then maintain a certain length and then decrease from the center side toward the outer circumferential side.

For example, referring to FIG. 6 again, from the center side toward the outer circumferential side, the section for increasing number of stacks b3, the section for uniform number of stacks b1, and the section for decreasing number of stacks b2 appear in order.

Therefore, according to this embodiment, bending that comprehensively considers the profiles of the section for increasing number of stacks b3, the section for uniform number of stacks b1, and the section for decreasing number of stacks b2 may be possible. That is, since the shape of the opposing surface S is configured to correspond to the profile of the section for decreasing number of stacks b2 located on the outer circumferential side of the electrode assembly 10, the profile of the section for increasing number of stacks b3 located on the center side of the electrode assembly 10, and the section for uniform number of stacks b1 located between the section for decreasing number of stacks b2 and the section for increasing number of stacks b3, respectively, buckling of the electrode tabs 11 located in the section for increasing number of stacks b3, in the section for uniform number of stacks b1, and in the section for decreasing number of stacks b2 may be effectively prevented. Furthermore, since the electrode tabs 11 are bent only by an amount corresponding to the thickness of the stacked layer at all radial positions, the result of the electrode tabs 11 reliably contacting each other without buckling may be achieved.

More preferably, the indentation depth of the opposing surface S that is indented in a direction opposite to the pressing direction D may be configured to increase linearly, then maintain a certain length and then decrease linearly from the center side toward the outer circumferential side.

For example, as can be seen in FIG. 6, the increase and decrease in the number of stacks of electrode tabs 11 may be linear. Therefore, according to a structure configured such that the indentation depth of the opposing surface S increases linearly, then maintains a certain length and then decreases linearly from the center side toward the outer circumferential side, the result of the electrode tabs 11 reliably contacting each other without buckling particularly at all radial positions may be achieved.

Meanwhile, as described above, the profile of the number of stacks of the electrode tabs 11 may vary depending on the height of the segments, the starting position of the segments, and the ending position of the segments. For example, the number of stacks of the electrode tabs 11 may increase and/or decrease in a curved shape. When the profile of the number of stacks is different as described above, it is obvious that the jig shape corresponding thereto may be changed.

Meanwhile, at least a portion of the electrode tab 11 of the electrode assembly 10 may be divided into a plurality of independently bendable segments.

For example, referring to FIG. 4 again, at least a portion of the electrode tab 11 of the electrode assembly 10 may be divided into a plurality of independently bendable segments, and the bent surface area of the bent electrode assembly 10 may include a section for uniform number of stacks b1 in which the number of stacks of segments is equal to or greater than a predetermined number of stacks along the radial direction, and a section for decreasing number of stacks b2 that is located adjacent to the section for uniform number of stacks b1 and in which the number of stacks of segments decreases as they move away from the section for uniform number of stacks b1. Additionally, the bent surface area of the bent electrode assembly 10 may include a section for increasing number of stacks b3 in which the number of stacks of segments increases along the radial direction.

In one aspect of the present disclosure, the indentation depth may be configured to be greater than the stacking thickness of the segments. If the indentation depth is configured to be smaller than the stacking thickness of the segments, the electrode tab 11 may be excessively pressed by the forming jig 100, and thus the buckling of the electrode tab 11 may be unavoidable.

Therefore, according to the above-described structure of the present disclosure, the indentation depth is configured to be greater than the stacking thickness of the segments, so that excessive pressing and buckling of the electrode tab 11 may be effectively prevented.

In another aspect of the present disclosure, the indentation depth may be configured to be equal to the stacking thickness of the segments. According to such a structure, the indentation depth is configured to be greater than the stacking thickness of the segments, so that excessive pressing and buckling of the electrode tab 11 may be effectively prevented. At the same time, the result of the electrode tabs 11 reliably contacting and overlapping each other without buckling may be achieved.

In one aspect of the present disclosure, the indentation depth may be determined as follows:

$$\text{Indentation depth} \leq \text{foil thickness * maximum number of foil stacks}$$

That is, the indentation depth may be less than or equal to the maximum stacking thickness of the foil at a specific point in the radial direction.

Specifically, the electrode may be a first electrode 15. At this time, the thickness of the positive electrode current collector (foil) constituting the first electrode 15 may be 10 um to 25 um. Accordingly, the bent surface area F of the positive

EP 4 648 209 A1

electrode may include an area in which the total stacking thickness of the segments is 100 um to 875 um.

In one aspect of the present disclosure, the indentation depth may be configured to be between 100 um and 875 um. For example, when the electrode tab 11 is a positive electrode tab, the total stacking thickness of the segments may be 100 um to 875 um. Therefore, when the indentation depth is such that the total stacking thickness of the segments is 100 um to 875 um, unnecessary buckling and short circuits may be prevented.

Meanwhile, the electrode may be a second electrode 17. At this time, the thickness of the negative electrode current collector (foil) constituting the second electrode 17 may be 5 um to 20 um. Accordingly, the bent surface area F of the negative electrode may include an area in which the total stacking thickness of the segments is 50 um to 700 um.

In another aspect of the present disclosure, the indentation depth may be configured to be between 50 um and 700 um. For example, when the electrode tab 11 is a negative electrode tab, the total stacking thickness of the segments may be 50 um to 700 um. Therefore, when the indentation depth is such that the total stacking thickness of the segments is 50 um to 700 um, unnecessary buckling and short circuits may be prevented.

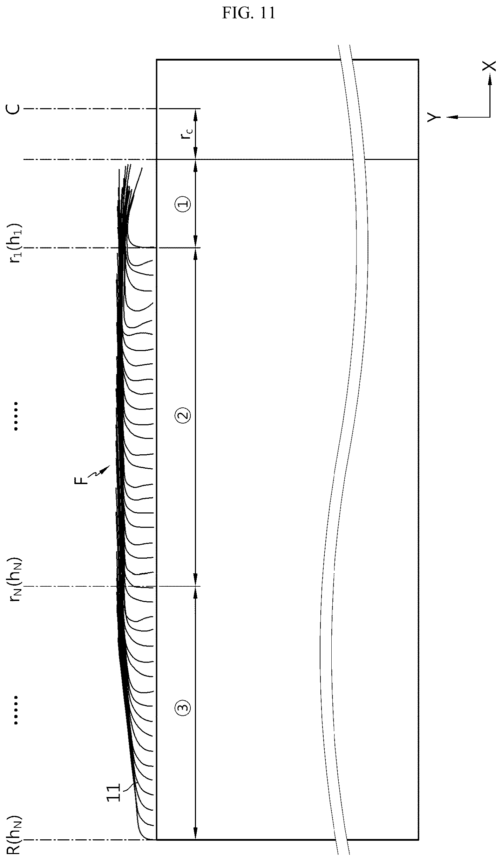

FIG. 11 is a schematic diagram showing a cross-section of a bent surface area formed when segments are bent toward the core side of the electrode assembly 10.

Referring to FIG. 11, the bent surface area F has a structure in which segments 111 overlap in a plurality of layers in the direction of the winding axis. The overlapping direction is the direction of the winding axis Y. Section ① is a segment omitted section (first part B1) without segments, and sections ② and ③ are sections (second part B2) in which a winding turn including segments 111 is located. More specifically, section ② is a height uniform section in which the height of the segments is uniformly maintained, and section ③ is a height variable section in which the height of the segments 111 is variable. Here, the radial lengths of sections (2) and ③ may vary according to the embodiment.

As a result of applying the forming device of FIGS. 8 to 10 as described above to press the electrode tabs 11 of the electrode assembly 10, it was possible to achieve a result in which the electrode tabs 11 are reliably in contact with and overlapped with each other while maintaining the electrode stack thickness profile without buckling, as shown in FIG. 11.

That is, the present disclosure may effectively prevent internal short circuits in a battery according to various embodiments as described above. Additionally, according to the present disclosure, a jig that considers the overlapping amount of the uncoated portion of the electrode assembly 10 may be provided, thereby effectively preventing buckling phenomenon of the uncoated portion.

Meanwhile, the terms indicating directions as used herein such as upper and lower are used for convenience of description only, and it is obvious to those skilled in the art that the terms may change depending on the position of the stated element or an observer.

The present disclosure has been hereinabove described with regard to a limited number of embodiments and drawings, but the present disclosure is not limited thereto and various modifications and variations will be possible by those having ordinary skill in the technical field pertaining to the present disclosure within the technical aspect of the present disclosure and the scope of the appended claims and their equivalents.

[Explanation of Reference Signs]

10: electrode assembly
r: radius
11: electrode tab (first electrode tab)
111: segment
12: electrode tab (second electrode tab)
15: first electrode
151: first electrode active material
16: separator
17: second electrode
H1: winding hole (hollow portion)
X: length direction, circumferential direction, winding direction
Y: width direction, winding axis, axial direction, central axis, height direction
Z: radial direction, normal direction
21: current collector plate (first current collector plate)
22: current collector plate (second current collector plate)
100: forming jig
S: opposing surface
D: pressing direction

**Claims**

1. A forming device for radially bending an electrode tab in which a first electrode of an electrode assembly where a first electrode, a separator, and a second electrode are stacked and wound around a central axis is extending to an axial end further than a separator and exposed,
   wherein the forming device comprises a forming jig for bending the electrode tab, the forming jig comprises an opposing surface facing the electrode assembly, and the opposing surface has an indentation depth of the opposing surface that is indented in a direction opposite to the pressing direction.

2. The forming device according to claim 1,
   wherein the opposing surface has a shape that is curved in a direction opposite to the pressing direction.

3. The forming device according to claim 1,
   wherein the indentation depth of the opposing surface that is indented in a direction opposite to the pressing direction increases toward the central axis.

4. The forming device according to claim 1,
   wherein the indentation depth of the opposing surface that is indented in a direction opposite to the pressing direction increases and then decreases from the center side toward the outer circumferential side.

5. The forming device according to claim 1,
   wherein the indentation depth of the opposing surface that is indented in a direction opposite to the pressing direction increases, then maintains a certain length and then decreases from the center side toward the outer circumferential side.

6. The forming device according to claim 1,
   wherein the indentation depth of the opposing surface that is indented in a direction opposite to the pressing direction increases linearly, then maintains a certain length and then decreases linearly from the center side toward the outer circumferential side.

7. The forming device according to claim 1,

   wherein at least a portion of the electrode tab of the electrode assembly is divided into a plurality of independently bendable segments, and
   the bent surface area of the bent electrode assembly comprises a section for uniform number of stacks in which the number of stacks of segments is equal to or greater than a predetermined number of stacks along the radial direction, and a section for decreasing number of stacks that is located adjacent to the section for uniform number of stacks and in which the number of stacks of segments decreases as moving away from the section for uniform number of stacks.

8. The forming device according to claim 7,
   wherein in the electrode assembly, the bent surface area of the bent electrode assembly comprises a section for increasing number of stacks in which the number of stacks of segments increases along the radial direction.

9. The forming device according to claim 7,
   wherein the indentation depth is greater than the stacking thickness of the segments.

10. The forming device according to claim 7,
    wherein the indentation depth is equal to the stacking thickness of the segments.

11. The forming device according to claim 1,
    wherein the indentation depth is 100 um to 875 um.

12. The forming device according to claim 1,
    wherein the indentation depth is 50 um to 700 um.

13. The forming device according to claim 1,
    wherein the forming jig comprises a steel material.

FIG. 1

FIG. 2

EP 4 648 209 A1

FIG. 3

FIG. 4

EP 4 648 209 A1

14

FIG. 5

FIG. 6

FIG. 7

FIG. 8

100

FIG. 9

FIG. 10

FIG. 11

## INTERNATIONAL SEARCH REPORT

| International application No. |
|---|
| **PCT/KR2024/013045** |

| A. | CLASSIFICATION OF SUBJECT MATTER |
|---|---|
| | **H01M 50/531**(2021.01)i; **H01M 50/538**(2021.01)i; **B21D 22/02**(2006.01)i |

According to International Patent Classification (IPC) or to both national classification and IPC

| B. | FIELDS SEARCHED |
|---|---|

Minimum documentation searched (classification system followed by classification symbols)

H01M 50/531(2021.01); B21D 5/16(2006.01); H01M 10/04(2006.01); H01M 2/02(2006.01); H01M 2/26(2006.01); H01M 4/70(2006.01); H01M 50/533(2021.01); H01M 50/538(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극탭(electrode tab), 전극 조립체(electrode assembly), 포밍 지그(forming jig), 절곡(fold), 좌굴 방지(buckling prevention), 가압면(pressurized surface), 내입 깊이(depth of penetration), 포밍 장치(forming apparatus)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0068956 A (LG ENERGY SOLUTION, LTD.) 18 May 2023 (2023-05-18)<br>See paragraphs [0049], [0083], [0084] and [0098]; claims 1 and 9; and figures 4 and 7. | 1-13 |
| A | KR 10-1731146 B1 (LG CHEM, LTD.) 27 April 2017 (2017-04-27)<br>See entire document. | 1-13 |
| A | KR 10-2019-0112471 A (HL GREENPOWER INC.) 07 October 2019 (2019-10-07)<br>See entire document. | 1-13 |
| A | WO 2023-021182 A1 (NORTHVOLT AB) 23 February 2023 (2023-02-23)<br>See entire document. | 1-13 |
| A | KR 10-2022-0140416 A (LG ENERGY SOLUTION, LTD.) 18 October 2022 (2022-10-18)<br>See entire document. | 1-13 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 December 2024** | **11 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/013045**

| Patent document cited in search report | | | Publication date (day/month/year) | Patent family member(s) | | | Publication date (day/month/year) |
|---|---|---|---|---|---|---|---|
| KR | 10-2023-0068956 | A | 18 May 2023 | CN | 118235290 | A | 21 June 2024 |
| | | | | WO | 2023-085828 | A1 | 19 May 2023 |
| KR | 10-1731146 | B1 | 27 April 2017 | KR | 10-2016-0007109 | A | 20 January 2016 |
| KR | 10-2019-0112471 | A | 07 October 2019 | | None | | |
| WO | 2023-021182 | A1 | 23 February 2023 | SE | 2151006 | A1 | 20 February 2023 |
| | | | | SE | 545601 | C2 | 07 November 2023 |
| KR | 10-2022-0140416 | A | 18 October 2022 | CN | 115207264 | A | 18 October 2022 |
| | | | | CN | 218333850 | U | 17 January 2023 |
| | | | | EP | 4322316 | A1 | 14 February 2024 |
| | | | | JP | 2024-513926 | A | 27 March 2024 |
| | | | | US | 2024-0194927 | A1 | 13 June 2024 |
| | | | | WO | 2022-216076 | A1 | 13 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230115853
- US 6677082 B
- US 6680143 B